# EUROPEAN PATENT SPECIFICATION

(11) **EP 1 968 829 B1**
(45) Date of publication and mention of the grant of the patent: **18.11.2009**
(21) Application number: 06829654.0
(22) Date of filing: 15.12.2006
(51) Int. Cl.: B60S 3/04

(54) **AUTOMATIC VEHICLE WASHING UNIT AND PROCESS**
AUTOMATISCHE FAHRZEUGWASCHEINHEIT UND VERFAHREN
UNITÉ DE LAVAGE AUTOMATIQUE DE VÉHICULE ET PROCÉDÉ

(30) Priority: 21.12.2005 IT MI20052434
(43) Date of publication of application: 17.09.2008
(73) Proprietor: Ceccato, S.p.A., 36041 Alte Ceccato di Montecchio Maggiore (IT)
(72) Inventor: PUGNO VANONI, Francesco, I-20123 Milano (IT); PILLON, Pierangelo, I-36040 Brendola (IT)
(74) Representative: Rapisardi, Mariacristina
(86) International application number: PCT/EP2006/012110
(87) International publication number: WO 2007/071346

(56) References cited:
- FR-A- 1 522 785
- US-A1- 3 368 572
- US-A1- 3 459 203
- US-A1- 3 612 077
- US-A1- 5 016 662

## Description

There are substantially three types of car washes on the market, in other words automatic washing units with brushes, automatic washing units without brushes, and "jet wash" units.

The first, and also the most widely used, wash the car through a mechanical action carried out by rotating brushes aided by water and chemical products with mainly detergent action.

The washing carried out by such units is of excellent quality but is expensive and is not without risks of damaging the vehicle due to the presence of brushes.

In the second type of unit there is no mechanical action of brushes for which reason the cleaning action is carried out by chemical products on average more aggressive with in addition the action of the high-pressure water.

Such units foresee an arch arranged above the vehicle, equipped with spray nozzles, and suitable for carrying out repeated washing strokes with respect to the vehicle to be washed during each of which the same or even a different specific washing agent is dispensed.

Although the washing is low-cost and without risk of damaging the vehicle, the washing cycle carried out by such units is clearly extremely long.

US-A1-3368572 discloses an automatic vehicle washing unit comprising at least one first arched structure equipped with spray nozzles of at least one first washing agent, below which the vehicle to be washed can be positioned, support means of said first arched structure, translation means of said support means parallel to the principal axis of said vehicle, and first hinging means of said first arched structure to said support means through a first hinging axis transversal to the direction of translation of said support means.

The third type of unit, which has become increasingly popular over the last few years, is not of the automatic type like the previous two, and consists of a technical building where the water is treated (softening/osmosis), the high-pressure water is generated and the detergent chemical product is injected. Such a technical apparatus performs the task of feeding a certain number of adjacent service stations in which the user through a lance carries out the washing operations in sequence in his vehicle.

The technical task proposed of the present invention is, therefore, to make an automatic vehicle washing unit and process that allow the aforementioned technical drawbacks of the prior art to be eliminated.

In this technical task a purpose of the invention is to make an automatic vehicle washing unit and process that ensure a satisfactory washing quality at low cost, in short times and without the risk of damaging the vehicle.

The technical task, as well as these and other purposes, according to the present invention are accomplished by making an automatic vehicle washing unit, particularly of the type without brushes, comprising at least one first arched structure equipped with spray nozzles of at least one first washing agent, below which the vehicle to be washed can be positioned, support means of said first arched structure, translation means of said support means parallel to the principal axis of said vehicle, and first hinging means of said first arched structure to said support means through a first hinging axis transversal to the direction of translation of said support means characterised by the features of claim 1.

Other characteristics of the present invention are also defined in the subsequent claims.

Further characteristics and advantages of the invention shall become clearer from the description of a preferred but not exclusive embodiment of the automatic vehicle washing unit and process according to the finding, illustrated for indicating and not limiting purposes in the attached drawings, in which:

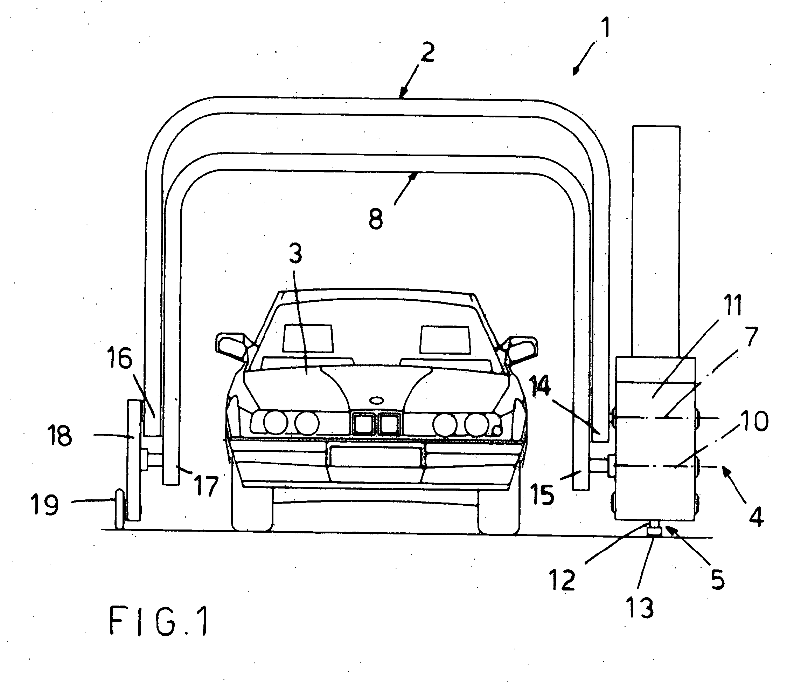

figure 1 shows a front view of a double arch unit in accordance with a preferred embodiment of the invention;

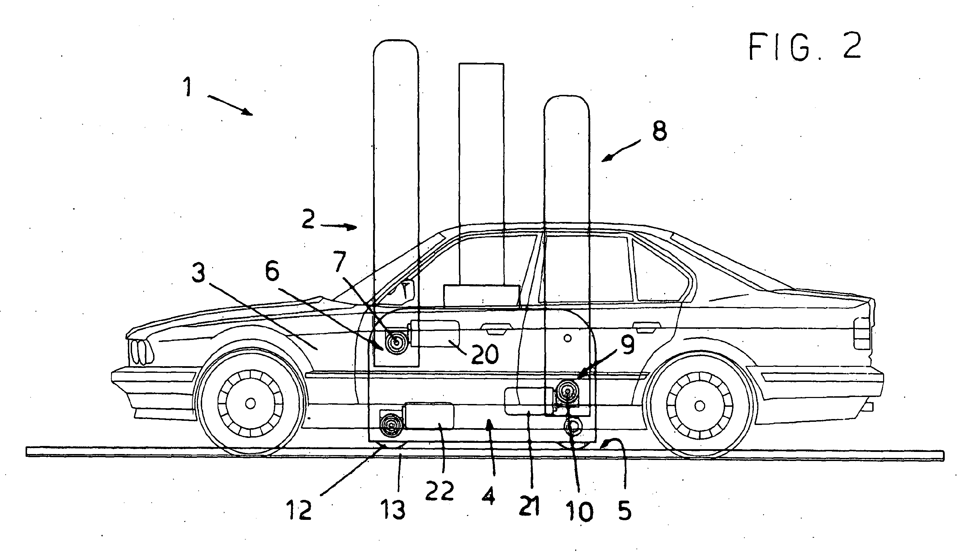

figure 2 shows a top side view of the unit of figure 1;
figures 3a and 3b show the sequential steps of a washing cycle carried out with the unit of figure 1; and
figures 4a and 4b show the sequential steps of a washing cycle carried out with a washing unit with a single arch in accordance with another preferred embodiment of the invention.

With reference to the quoted figures, an automatic vehicle washing unit, particularly of the type without brushes, is shown, generically indicated with reference numeral 1.

The automatic washing unit 1 comprises at least one first arched structure 2 equipped with spray nozzles (not shown) of at least one first washing agent, below which the vehicle 3 to be washed can be positioned.

The first arched structure 2 is carried by support means 4 that suitable translation means 5 are able to move parallel to the principal axis of the vehicle 3.

The first arched structure 2 is operatively connected to the support means 4 through first hinging means 6 defining a first hinging axis 7 transversal to the direction of translation of the support means 4, and in particular arranged horizontally.

As shown more precisely in the quoted figures, the automatic washing unit 1 comprises at least one second arched structure 8 equipped with spray nozzles (not shown) of at least one second washing agent.

The second arched structure 8 is carried by the support means 4 to which it is operatively connected through second hinging means 9 defining a second hinging axis 10 parallel to the first hinging axis 7.

The first and second hinging axis 7 and 10 are separated along the direction of translation of the support means 4 by a fixed distance.

In particular, each arched structure 2 and 8 respectively is able to rotate in the clockwise and anti-clockwise direction about the respective hinging axis 7 and 10 between a vertical arrangement and a horizontal arrangement.

The first arched structure 2 is arranged entirely outside of the external profile of the second arched structure 8 and has its hinging axis 7 horizontal at a greater height from the floor than that of the hinging axis 10 of the second arched structure 8. In this way, there is no mutual interference during the rotation of the first and second arched structures 2 and 8.

The spray nozzles present on each arched structure 2 and 8 are organised in multiple arches specialised in dispensing different washing agents.

In particular, there can be ramps with different numbers and types of nozzles, with the function of dispensing different washing agents and/or water that has preferably been softened and dematerialised, at a low or high pressure.

The support means 4 comprise a containment structure 11 arranged outside of the external profile of the arched structure 2, whereas the translation means 5 comprise a trolley 12 that is mobile along a fixed linear guide 13.

The first adjacent ends 14 and 15 respectively of the respective first and second arched structure 2 and 8 are hinged to the containment structure 11, whereas the second adjacent ends 16 and 17 respectively are joined through a plate 18 having a wheel 19 for resting on the floor orientated parallel to the direction of translation of the trolley 12.

The containment structure 11 contains the motors 20 and 21 respectively for the rotation of the respective first and second arched structure and the motor 22 that actuates the trolley 12 into translation.

The containment structure 11 contains the means (not shown) for intercepting and distributing the washing agents to each of the arched structures.

The washing agents can comprise different types of emollient, or softened and dematerialised water.

The automatic washing process consists of moving the first and second arched structure 2 and 8 above the vehicle 3 to be washed with a displacement having at least one translation component that extends along the principal axis del vehicle 3 and that is common to the first and second arched structure 2 and 8, simultaneously dispensing the first and second washing agent during such a translation, and setting a suitable translation speed such as to ensure that at each point of application of the first washing agent the second washing agent is applied with a sufficient time delay to the first washing agent to carry out its action.

The displacement of the respective first and second arched structure 2 and 8 also has a rotary component to dispense the respective first and second washing agent onto the front end and rear end of the vehicle 3.

The rotary component of the displacement of the respective first and second arched structure 2 and 8 as stated goes around the respective first and second horizontal rotation axis 7 and 10, between a vertical arrangement and a horizontal arrangement of the respective first and second arched structure 2 and 8.

The rotary component of the displacement of the respective first and second arched structure 2 and 8 is carried out with time staggering such as to ensure that at each point of application of the first washing agent the second washing agent is applied with a sufficient time delay to the first washing agent to carry out its action.

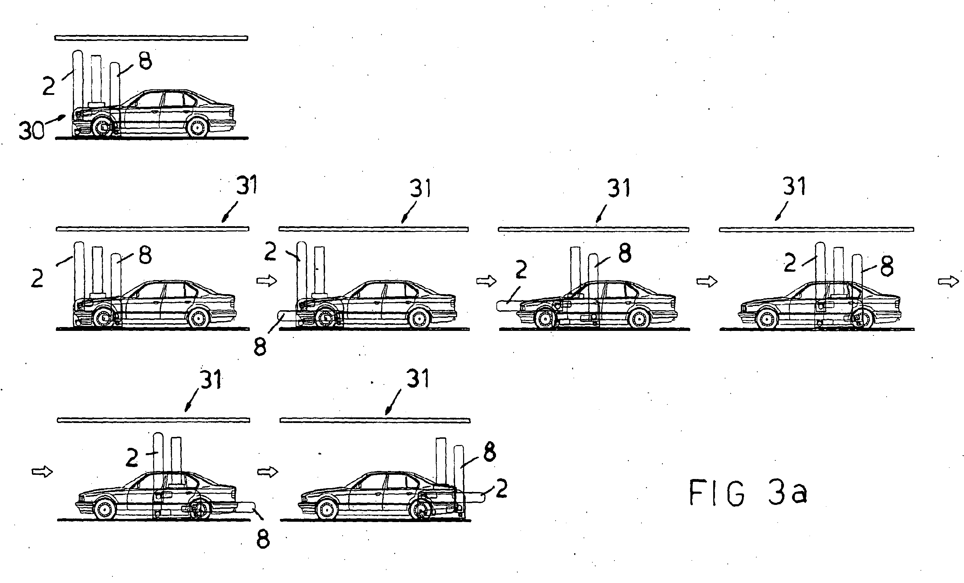

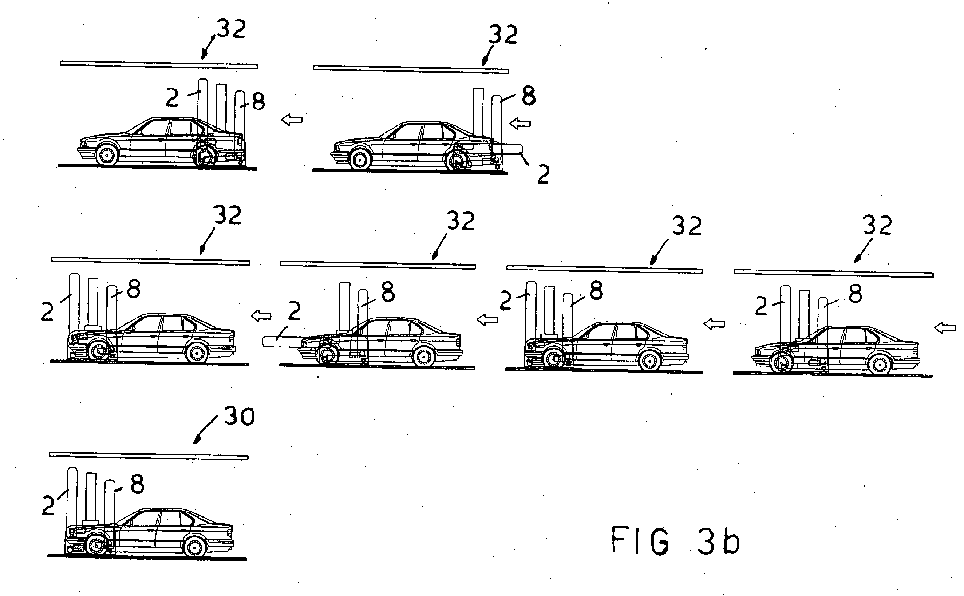

The operation of the double arch unit illustrated in figure 3 is briefly the following.

The system in rest condition, positioned at the start of the outward translation stroke, is outlined in the frames 30.

The outward translation stroke is outlined by the frames 31, to be considered in time sequence, and the return translation stroke is outlined by the frames 32, to be considered in time sequence.

The system is provided with means for detecting the correct positioning of the vehicle, for example of the photocell type, and means for indicating the correct positioning of the vehicle, for example a semaphore station.

When the washing programme is started the second arched structure 8 carries out a rotation so as to be positioned horizontal to the floor and with the dispensing ramp of the first washing agent, for example a first type of emollient, opposite and close to the front end of the vehicle 3.

The first washing agent begins to be dispensed, the system starts up the outward translation stroke and simultaneously the second arched structure 8 goes back into vertical position. While the second arched structure 8 rotates towards the vertical arrangement the first arched structure 2 rotates towards the horizontal position to in turn go opposite the front end of the vehicle and start of the dispensing of the second washing agent, for example a second type of emollient.

The system continues its outward translation stroke from the front end to the rear end of the vehicle whilst the first arched structure 2 also goes back into vertical position.

The temporally staggered rotation between the first and second arched structure 2 and 8 allows, at every point of the front end of the vehicle 3, the second washing agent to be dispensed with a sufficient time delay to the first washing agent to carry out its action.

At the end of the outward translation with a set time phase relationship the first arched structure 2 and then the second arched structure 8 go into horizontal position opposite and close to the rear end of the vehicle to wash it.

The provision of two distinct washing agents that operate simultaneously becomes important due to the different types of dirt to be treated that can coexist.

For example, the first washing agent is an alkaline emollient particularly suitable for organic dirt (insects, etc..) whereas the second is an acid emollient particularly suitable for inorganic dirt (dust coming from exhaust pipes, from erosion of the brakes, etc..).

The distance between the two arched structures 2 and 8 combined with the translation speed of the system ensures the action time of the two washing agents.

When the outward translation stroke is complete the system has the second arched structure 8 in vertical position and the first arched structure 2 in horizontal position.

The dispensing of the first and second washing agent is completed and after the necessary reaction time softened and dematerialised water is dispensed under high pressure through the relative arch of nozzles mounted on the first arched structure 2 that at that moment is still in the horizontal position. This has the purpose of removing the washing agents from the vehicle 3.

Then the return translation stroke of the system is started up and at the same time the first arched structure goes back into vertical position to then go back down at the end of the return translation stroke in order to operate on the front end of the vehicle 3.

In the return translation stroke the second arched structure 8 preferably remains in the vertical position and dispenses dematerialised water and wax chemical product for the entire stroke.

The presence of the two arched structures 2 and 8 each equipped with multiple arches specialised for different liquids, and the dispensing combined in a single stroke, advantageously allow the total time of the washing cycle to be substantially reduced.

The automatic unit described can be installed in the servile stations of existing non-automatic "jet wash" units.

Advantageously, in this case the softened and dematerialised water already present in the installation is used, with a consequent further saving of the product.

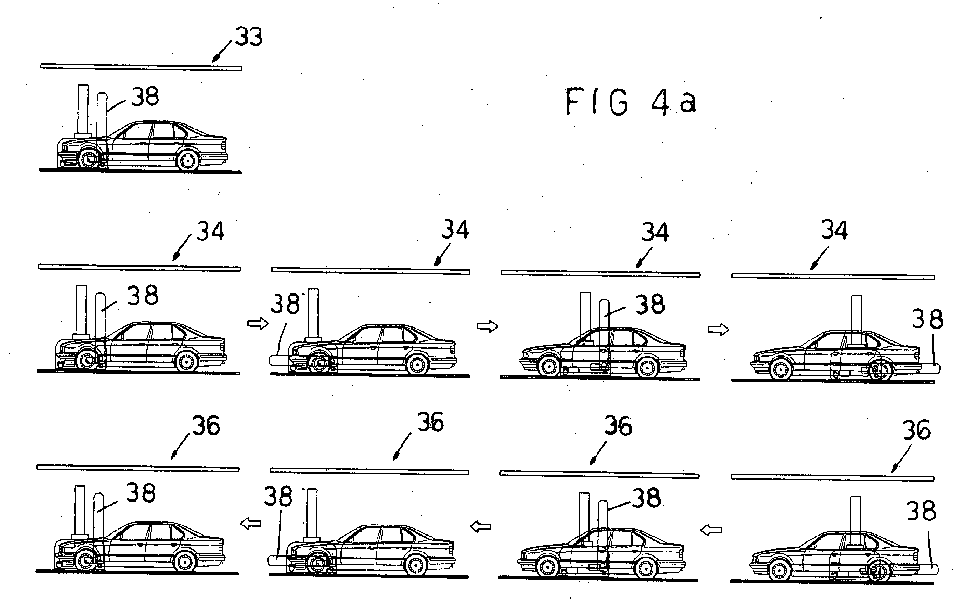

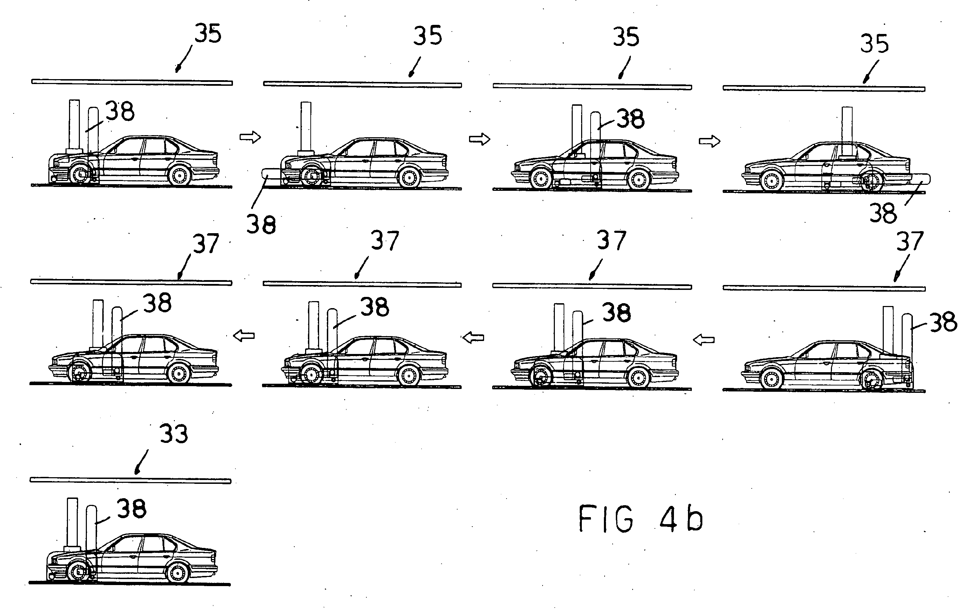

The operation of the single-arch unit is illustrated in figure 4.

The single arched structure is now indicated by reference numeral 38.

The system in rest condition, positioned at the start of the outward translation strokes, is outlined in the frames 33.

The two outward translation strokes are outlined by the frames 34 and 35, to be considered in time sequence, whereas the two return translation strokes are outlined by the frames 36 and 37, also to be considered in time sequence.

During the first outward stroke 34 the first washing agent is dispensed, in the first return stroke 36 the second washing agent is dispensed, in the second outward stroke 35 the softened and dematerialised rinsing water is dispensed under high pressure and in the second return stroke 37 the wax is dispensed.

In the first three passages the arched structure 38 carries out a translation associated with a rotation of 90° to wash the front end of the vehicle, and with a rotation of 90° in the opposite direction to wash the rear end of the vehicle.

In the fourth passage the arched structure 38 carries out a simple translation with vertical arrangement.

Of course, the lower cost of the unit is offset by a longer time to carry out the cycle compared to the double-arch unit.

The automatic washing unit and process thus conceived can undergo numerous modifications and variations, all of which are covered by the inventive concept; moreover, all of the details can be replaced by technically equivalent elements.

For example, the system can also foresee motorisation on both sides, and therefore have an additional motorised trolley opposite the trolley 12.

The first and second arched structure 2 and 8 also act as a support and rigidification for the system and transmit the motion to the plate 18.

The system can have its own rigid connection system for the connection between the trolley 12 and the plate 18, in which case the first and second arched structure 2 and 8 keep just the function of spraying the washing agents.

In particular, the first arched structure 2 and the second arched structure 8, although they are illustrated with different heights, can also be of the same height.

In this last case, whereas the first arched structure in use carries out an angular excursion of 180°, moving from the vertical position by 90° either in the clockwise direction or in the anti-clockwise direction, the second arched structure 8 in use carries out an angular excursion of less than 180°, moving from the vertical position by an acute angle in the anti-clockwise direction to avoid interference with the first arched structure, and by 90° in the clockwise direction.

In this last case a reduction in height of the overall bulk of the unit is achieved whilst still maintaining a substantial washing efficiency.

Indeed, the first arched structure 2 that dispenses the alkaline emollient operates completely on the front end of the vehicle, where the organic dirt is more concentrated, with an angular excursion of 90°, whereas the second arched structure 8 that dispenses the acid emollient operates completely on the rear end of the vehicle, where the inorganic dirt is more concentrated, with a complete angular excursion of 90°.

In practice, the materials used, as well as the sizes, can be whatever according to the requirements and the state of the art.

## Claims

1. Automatic vehicle washing unit, particularly of the type without brushes, comprising at least one first arched structure equipped with spray nozzles of at least one first washing agent, below which the vehicle to be washed can be positioned, support means of said first arched structure, translation means of said support means parallel to the principal axis of said vehicle, and first hinging means of said first arched structure to said support means through a first hinging axis transversal to the direction of translation of said support means, **characterised in that** it comprises at least one second arched structure equipped with spray nozzles of at least one second washing agent, second hinging means of said second arched structure to said support means through a second hinging axis parallel to said first hinging axis and separated from it, along said direction of translation, by a fixed distance.

2. Automatic vehicle washing unit according to claim 1, **characterised in that** said first and second hinging axis are horizontal.

3. Automatic vehicle washing unit according to one or more of the previous claims, **characterised in that** said respective first and second arched structures are able to rotate in the clockwise and anti-clockwise direction about said respective first and second hinging axis between a vertical arrangement and a horizontal or inclined arrangement to wash the front and rear ends of said vehicle.

4. Automatic vehicle washing unit according to one or more of the previous claims, **characterised in that** said spray nozzles on each of said first and second arched structures are organised in multiple arches specialised in dispensing different washing agents.

5. Automatic vehicle washing unit according to one or more of the previous claims, **characterised in that** said first arched structure is outside of the external profile of said second arched structure.

6. Automatic vehicle washing unit according to one or more of the previous claims, **characterised in that** said first arched structure has a different height to said second arched structure.

7. Automatic vehicle washing unit according to one or more of the previous claims, **characterised in that** said first arched structure and said second arched structure are the same height.

8. Automatic vehicle washing unit according to one or more of the previous claims, **characterised in that** said support means comprise a containment structure outside of the external profile of said first arched structure, and said translation means comprise a support trolley of said containment structure, mobile along a fixed linear guide that extends parallel to said direction of translation.

9. Automatic vehicle washing unit according to one or more of the previous claims, **characterised in that** first adjacent ends of said first and second arched structure are hinged to said containment structure.

10. Automatic vehicle washing unit according to one or more of the previous claims, **characterised in that** second adjacent ends of said first and second arched structure are joined through a plate having a wheel for resting on the floor orientated parallel to said direction of translation.

11. Automatic vehicle washing unit according to one or more of the previous claims, **characterised in that** said containment structure contains the rotation motors of said first and second arched structure and the translation motor of said trolley.

12. Automatic vehicle washing unit according to one or more of the previous claims, **characterised in that** said containment structure contains the intercepting and distribution means of said washing agents to said first and second arched structure.

13. Automatic vehicle washing unit according to one or more of the previous claims, **characterised in that** said washing agents comprise different types of emollient.

14. Automatic vehicle washing unit according to one or more of the previous claims, **characterised in that** said washing agents comprise softened and dematerialised water.

## Patentansprüche

1. Automatische Autowaschanlage, und genauer vom Typ ohne Bürsten, umfassend mindestens eine erste bogenförmige Struktur, ausgestattet mit Spritzdüsen eines ersten Waschmittels, worunter das zu waschende Fahrzeug gestellt werden kann, Stützmittel der besagten ersten bogenförmigen Struktur, Mittel zur Translation, die parallel zur Hauptachse des besagten Fahrzeugs liegen, und erste Schwenkmittel der besagten bogenförmigen Struktur, angebracht an besagten Stützmitteln durch eine erste Schwenkachse, die quer zur Translationsrichtung der besagten Stützmittel verläuft, **gekennzeichnet dadurch, dass** sie mindestens eine zweite bogenförmige Struktur umfasst, ausgestattet mit Spritzdüsen eines mindestens zweiten Waschmittels; sie umfasst ferner zweite Schwenkmittel der besagten zweiten bogenförmigen Struktur, angebracht an besagten Stützmitteln durch eine zweite Schwenkachse, die parallel zu besagter erster Schwenkachse und längs der besagten Translationsrichtung durch einen festgelegten Abstand von ihr getrennt verläuft.

2. Automatische Autowaschanlage nach Anspruch 1, **gekennzeichnet dadurch, dass** besagte erste und zweite Schwenkachse horizontal sind.

3. Automatische Autowaschanlage nach einem oder mehreren der vorherigen Ansprüche, **gekennzeichnet dadurch, dass** besagte jeweilige erste und zweite bogenförmige Struktur im Uhrzeigersinn und entgegen dem Uhrzeigersinn in Bezug auf die jeweilige erste oder zweite Schwenkachse zwischen einer vertikalen und einer horizontalen oder geneigten Lage rotieren kann, damit die Vorder- oder Rückseiten des besagten Fahrzeugs gewaschen werden.

4. Automatische Autowaschanlage nach einem oder mehreren der vorherigen Ansprüche, **gekennzeichnet dadurch, dass** besagte Spritzdüsen auf jedem der besagten ersten oder zweiten bogenförmigen Strukturen in mehreren Bogen gestaltet sind, die darauf spezialisiert sind, verschiedene Waschmittel abzugeben.

5. Automatische Autowaschanlage nach einem oder mehreren der vorherigen Ansprüche, **gekennzeichnet dadurch, dass** sich besagte erste bogenförmige Struktur außerhalb des Außenprofils der besagten zweiten bogenförmigen Struktur befindet.

6. Automatische Autowaschanlage nach einem oder mehreren der vorherigen Ansprüche, **gekennzeichnet dadurch, dass** besagte erste bogenförmige Struktur gegenüber der zweiten bogenförmigen Struktur eine verschiedene Höhe aufweist.

7. Automatische Autowaschanlage nach einem oder mehreren der vorherigen Ansprüche, **gekennzeichnet dadurch, dass** besagte erste bogenförmige Struktur und besagte zweite bogenförmige Struktur die gleiche Höhe haben.

8. Automatische Autowaschanlage nach einem oder mehreren der vorherigen Ansprüche, **gekennzeichnet dadurch, dass** besagte Stützmittel eine Schutzstruktur außerhalb des Außenprofils der besagten ersten bogenförmigen Struktur und besagte Translationsmittel einen Stützwagen der besagten Schutzstruktur umfassen, der sich längs einer festen linearen Führung bewegt, die parallel zur besagten Translationsrichtung verläuft.

9. Automatische Autowaschanlage nach einem oder mehreren der vorherigen Ansprüche, **gekennzeichnet dadurch, dass** erste anliegende Enden der besagten ersten und zweiten bogenförmigen Struktur an der besagten Schutzstruktur angehängt sind.

10. Automatische Autowaschanlage nach einem oder mehreren der vorherigen Ansprüche, **gekennzeichnet dadurch, dass** zweite anliegende Enden der besagten ersten und zweiten bogenförmigen Struktur miteinander verbunden sind durch eine Platte, die ein Rad besitzt, damit sie parallel zu besagter Translationsrichtung auf dem Boden steht.

11. Automatische Autowaschanlage nach einem oder mehreren der vorherigen Ansprüche, **gekennzeichnet dadurch, dass** besagte Schutzstruktur den Rotationsmotor der besagten ersten und zweiten bogenförmigen Struktur und den Translationsmotor des besagten Wagens enthält.

12. Automatische Autowaschanlage nach einem oder mehreren der vorherigen Ansprüche, **gekennzeichnet dadurch, dass** besagte Schutzstruktur die Sammel- und Verteilermittel besagter Waschmittel für besagte erste und zweite bogenförmige Struktur enthält.

13. Automatische Autowaschanlage nach einem oder mehreren der vorherigen Ansprüche, **gekennzeichnet dadurch, dass** besagte Waschmittel verschiedene Typen von Weichmachern umfasst.

14. Automatische Autowaschanlage nach einem oder mehreren der vorherigen Ansprüche, **gekennzeichnet dadurch, dass** besagte Waschmittel entkalktes und dematerialisiertes Wasser umfasst.

## Revendications

1. Unité de lavage de voiture automatique, particulièrement du type sans brosses, comprenant au moins une première structure arquée équipée de pulvérisateurs d'au moins un premier produit détergent, sous laquelle le véhicule à laver peut être placé, un moyen de support de ladite première structure arquée, un moyen de translation du dit support parallèle à l'axe principal du dit véhicule, et un premier moyen de pivotement de ladite première structure arquée sur ledit support à travers un premier axe de pivotement transversal à la direction de la translation du dit support, **caractérisée par le fait qu'**elle comprend au moins une seconde structure arquée équipée de pulvérisateurs d'au moins un second produit détergent, un second moyen de pivotement de ladite seconde structure arquée sur ledit support à travers un second axe de pivotement parallèle au dit premier axe de pivotement et séparé de celui-ci, dans ladite direction de translation, par une distance fixée.

2. Unité de lavage de voiture automatique selon la revendication 1, **caractérisée par le fait que** lesdits premier et second axes sont horizontaux.

3. Unité de lavage de voiture automatique selon une ou plusieurs des revendications qui précèdent, **caractérisée par le fait que** lesdites première et seconde structures arquées respectives sont à même de pivoter dans la direction des aiguilles d'une montre et en sens inverse autour des dits premier et second axes de rotation entre un arrangement vertical et un arrangement horizontal ou incliné pour laver l'avant et l'arrière du dit véhicule.

4. Unité de lavage de voiture automatique selon une ou plusieurs des revendications qui précèdent, **caractérisée par le fait que** lesdits pulvérisateurs sur chacune des dites première et seconde structures arquées sont organisés en arcs multiples spécialisés dans la pulvérisation de produits détergents différents.

5. Unité de lavage de voiture automatique selon une ou plusieurs des revendications qui précèdent, **caractérisée par le fait que** ladite première structure arquée se trouve à l'extérieur du contour externe de ladite seconde structure arquée.

6. Unité de lavage de voiture automatique selon une ou plusieurs des revendications qui précèdent, **caractérisée par le fait que** ladite première structure arquée a une hauteur différente de ladite second structure arquée.

7. Unité de lavage de voiture automatique selon une ou plusieurs des revendications qui précèdent, **caractérisée par le fait que** ladite première structure arquée et ladite seconde structure arquée sont de la même hauteur.

8. Unité de lavage de voiture automatique selon une ou plusieurs des revendications qui précèdent, **caractérisée par le fait que** le moyen de support comprend une structure de confinement au dehors du contour externe de ladite première structure arquée, et que ledit moyen de translation comprend un chariot de support de ladite structure de confinement, mobile le long d'un coulisseau linéaire fixe qui s'étend parallèle à ladite direction de translation.

9. Unité de lavage de voiture automatique selon une ou plusieurs des revendications qui précèdent, **caractérisée par le fait que** les premières extrémités adjacentes des dites première et seconde structures arquées sont articulées sur ladite structure de confinement.

10. Unité de lavage de voiture automatique selon une ou plusieurs des revendications qui précèdent, **caractérisée par le fait que** les secondes extrémités adjacentes des dites première et seconde structures arquées sont jointes à travers un plateau ayant une roue posée sur le sol orientée parallèlement à ladite direction de translation.

11. Unité de lavage de voiture automatique selon une ou plusieurs des revendications qui précèdent, **caractérisée par le fait que** ladite structure de confinement contient les moteurs de rotation des dites première et seconde structures arquées et le moteur de translation du dit chariot.

12. Unité de lavage de voiture automatique selon une ou plusieurs des revendications qui précèdent, **caractérisée par le fait que** ladite structure de confinement contient le moyen d'interception et de distribution des dits produits détergents aux dites première et seconde structures arquées.

13. Unité de lavage de voiture automatique selon une ou plusieurs des revendications qui précèdent, **caractérisée par le fait que** lesdits produits détergents comprennent différents types d'émollients.

14. Unité de lavage de voiture automatique selon une ou plusieurs des revendications qui précèdent, **caractérisée par le fait que** lesdits produits détergents comprennent de l'eau adoucie et déminéralisée.
